# EUROPEAN PATENT APPLICATION

(11) **EP 4 818 751 A1**
(43) Date of publication of application: **07.10.2026**
(21) Application number: 26169129.9
(22) Date of filing: 30.03.2026
(51) Int. Cl.: G01S 13/82, G01S 13/76, H04W 4/02, H04W 4/80

(54) **BLUETOOTH RANGING CORRECTION METHOD AND APPARATUS, INITIATOR, AND MEDIUM**

(30) Priority: 01.04.2025 CN 202510398741
(71) Applicant: Kunshan Telink Semiconductor Co., Ltd., Kunshan, Jiangsu 215300 (CN)
(72) Inventor: HUANG, Haili, Shanghai, 201203 (CN); LOU, Wenfeng, Shanghai, 201203 (CN); JIN, Haipeng, Shanghai, 201203 (CN)
(74) Representative: Dantz, Jan Henning

(57) **Abstract**

A Bluetooth ranging correction method and apparatus, an initiator, and a medium are disclosed. The method comprises: sending by an initiator a first continuous wave signal to a reflector; performing by the reflector frequency conversion on the first continuous wave signal to obtain a first measurement; switching by the initiator to a reception state, and obtaining a first timestamp; receiving by the initiator a second continuous wave signal from the reflector, obtaining a second timestamp and performing by the initiator frequency conversion on the second continuous wave signal to obtain a second measurement; and obtaining by the initiator the first measurement from the reflector, performing correction on the first and second measurements using the first and second timestamps and determining a distance between the initiator and the reflector by using the corrected first and second measurement values. The method can correct the distance measurement, reducing measurement deviation during Bluetooth ranging.

## Description

### TECHNICAL FIELD

The present disclosure relates to the field of Bluetooth technology, more particularly to a Bluetooth ranging correction method and apparatus, an initiator, and a medium.

### BACKGROUND

Current mainstream Bluetooth devices typically use a low-IF receiver for signal transmission and reception. A low-IF receiver is a receiver architecture that down-converts a radio frequency (RF) signal to a low-frequency signal (but not zero) close to direct current (DC). It uses a local oscillator signal offset from the reception band by a certain frequency interval, thereby avoiding DC offset and flicker noise issues common in zero-IF receivers.

However, when a Bluetooth device using a low-IF receiver performs frequency conversion, the generated digital intermediate frequency (IF) is inconsistent with the actual intermediate frequency, causing a deviation in the measured phase. Therefore, how to reduce measurement deviation during Bluetooth ranging is an urgent problem to be solved.

### SUMMARY

In view of the problems existing in the prior art described above, a Bluetooth ranging correction method and apparatus, an initiator, and a medium are provided. Using this method, apparatus, and computer-readable storage medium, measurement deviation during Bluetooth ranging can be reduced.

The present disclosure provides the following solutions.

The present disclosure provides a Bluetooth ranging correction method applicable to a Bluetooth ranging apparatus including an initiator and a reflector. The method includes:
sending, by the initiator, a first continuous wave signal;
receiving, by the reflector, the first continuous wave signal, and performing frequency conversion on the first continuous wave signal to obtain a first measurement value;
switching, by the reflector, to a transmission state;
switching, by the initiator, to a reception state, and obtaining a first timestamp that indicates time at which the initiator switches to the reception state;
sending, by the reflector, a second continuous wave signal;
receiving, by the initiator, the second continuous wave signal, and obtaining a second timestamp that indicates time at which the initiator receives the second continuous wave signal;
performing, by the initiator, frequency conversion on the second continuous wave signal to obtain a second measurement value; and
obtaining, by the initiator, the first measurement value from the reflector, performing correction on the first measurement value and the second measurement value using the first timestamp and the second timestamp, and determining a distance between the initiator and the reflector by using the corrected first and second measurement values.

In some possible embodiments, a digital mixer of the initiator remains enabled during execution of the Bluetooth ranging correction, to allow for compensation for variation in phase of the digital mixer of the initiator introduced in measurements across channels of different frequencies.

In some possible embodiments, performing, by the initiator, correction on the first measurement value and the second measurement value using the first timestamp and the second timestamp includes:
determining, by the initiator, a product of the first measurement value and the second measurement value; and
performing, by the initiator, correction on the product using the first timestamp and the second timestamp.

In some possible embodiments, the first measurement value PCTi is calculated using the following formula:
$PCTi = exp \left(j*\left(2π*Ftx*\left(T1-T1\right)+α-2π*Ftx*\left(T2-T1\right)-β\right)\right) = exp \left(j*\left(α-2π*Ftx*\left(T2-T1\right)-β\right)\right)$
where Ftx represents an operating frequency of a phase-locked loop (PLL) in a transmission state, T1 represents time at which the initiator sends the first continuous wave signal, T2 represents time at which the reflector receives the first continuous wave signal, α represents a phase of the initiator at time T1, and β represents a phase of the reflector at time T1.

In some possible embodiments, the second measurement value PCTr is calculated using the following formula: 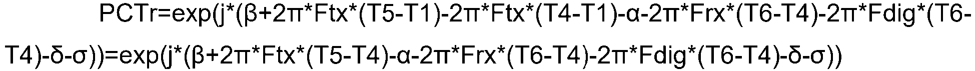 PCTr = exp(j * (β + 2π * Ftx * (T5 - T1) - 2π * Ftx * (T4 - T1) - α - 2π * Frx * (T6 - T4) - 2π * Fdig * (T6 - T4) - δ - σ)) = exp(j * (β + 2π * Ftx * (T5 - T4) - α - 2π * Frx * (T6 - T4) - 2π * Fdig * (T6 - T4) - δ - σ))
where Frx represents an operating frequency of the PLL in a reception state, Fdig represents an operating frequency of the digital mixer, Fif+Frx=Ftx, T3 represents time at which the reflector switches to the transmission state, T4 represents time at which the initiator switches to the reception state, T5 represents time at which the reflector starts sending the second continuous wave signal, T6 represents time at which the initiator receives the second continuous wave signal, δ represents a phase of the digital mixer of the initiator at time T4, and σ represents a phase jump of the initiator caused by switching from transmission to reception.

In some possible embodiments, the initiator calculates a product PCTi*PCTr of the first measurement value PCTi and the second measurement value PCTr using the following formula: 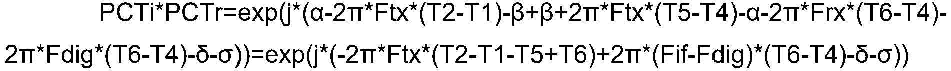 PCTi * PCTr = exp(j * (α - 2π * Ftx * (T2 - T1) - β + β + 2π * Ftx * (T5 - T4) - α - 2π * Frx * (T6 - T4) - 2π * Fdig * (T6 - T4) - δ - σ)) = exp(j * (- 2π * Ftx * (T2 - T1 - T5 + T6) + 2π * (Fif - Fdig) * (T6 - T4) - δ - σ))
where T2-T1 and T6-T5 each represent time of flight corresponding to the distance.

In a second aspect, the present disclosure provides a Bluetooth ranging correction method applicable to an initiator of a Bluetooth ranging apparatus further including a reflector. The method includes:
sending, by the initiator, a first continuous wave signal, the reflector being configured to perform frequency conversion on the first continuous wave signal to obtain a first measurement value;
switching, by the initiator, to a reception state, and obtaining a first timestamp that indicates time at which the initiator switches to the reception state;
receiving, by the initiator, a second continuous wave signal sent by the reflector, and obtaining a second timestamp that indicates time at which the initiator receives the second continuous wave signal;
performing, by the initiator, frequency conversion on the second continuous wave signal to obtain a second measurement value; and
obtaining, by the initiator, the first measurement value from the reflector, performing correction on the first measurement value and the second measurement value using the first timestamp and the second timestamp, and determining a distance between the initiator and the reflector by using the corrected first and second measurement values.

In some possible embodiments, a digital mixer of the initiator remains enabled during execution of the Bluetooth ranging correction, to allow for compensation for variation in phase of the digital mixer of the initiator introduced in measurements across channels of different frequencies.

In some possible embodiments, the initiator determines a product of the first measurement value and the second measurement value; and the initiator performs correction on the product using the first timestamp and the second timestamp.

In some possible embodiments, the first measurement value PCTi is calculated using the following formula:
$PCTi = exp \left(j*\left(2π*Ftx*\left(T1-T1\right)+α-2π*Ftx*\left(T2-T1\right)-β\right)\right) = exp \left(j*\left(α-2π*Ftx*\left(T2-T1\right)-β\right)\right)$
where Ftx represents an operating frequency of a phase-locked loop (PLL) in a transmission state, T1 represents time at which the initiator sends the first continuous wave signal, T2 represents time at which the reflector receives the first continuous wave signal, α represents a phase of the initiator at time T1, and β represents a phase of the reflector at time T1.

In some possible embodiments, the second measurement value PCTr is calculated using the following formula: 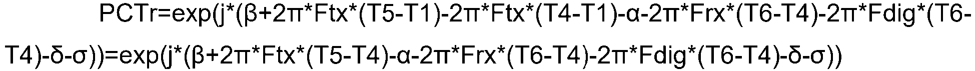 PCTr=exp(j*(β+2π*Ftx*(T5-T1)-2π*Ftx*(T4-T1)-α-2π*Frx*(T6-T4)-2π*Fdig*(T6-T4)-δ-σ))=exp(j*(β+2π*Ftx*(T5-T4)-α-2π*Frx*(T6-T4)-2π*Fdig*(T6-T4)-δ-σ))
where Frx represents an operating frequency of the PLL in a reception state, Fdig represents an operating frequency of the digital mixer, Fif+Frx=Ftx, T3 represents time at which the reflector switches to the transmission state, T4 represents time at which the initiator switches to the reception state, T5 represents time at which the reflector starts sending the second continuous wave signal, T6 represents time at which the initiator receives the second continuous wave signal, δ represents a phase of the digital mixer of the initiator at time T4, and σ represents a phase jump of the initiator caused by switching from transmission to reception.

In some possible embodiments, the initiator calculates a product PCTi*PCTr of the first measurement value PCTi and the second measurement value PCTr using the following formula: 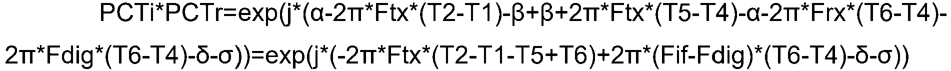 PCTi*PCTr=exp(j*(α-2π*Ftx*(T2-T1)-β+β+2π*Ftx*(TS-T4)-α-2π*Frx*(T6-T4)-2π*Fdig*(T6-T4)-δ-σ))=exp(j*(-2π*Ftx*(T2-T1-T5+T6)+2π*(Fif-Fdig)*(T6-T4)-δ-σ))
where T2-T1 and T6-T5 each represent time of flight corresponding to the distance.

In a third aspect, the present disclosure provides a Bluetooth ranging apparatus including an initiator and a reflector.

The initiator is configured to send a first continuous wave signal.

The reflector is configured to receive the first continuous wave signal, and perform frequency conversion on the first continuous wave signal to obtain a first measurement value.

The reflector is configured to switch to a transmission state.

The initiator is configured to switch to a reception state, and obtain a first timestamp indicating time at which the initiator switches to the reception state.

The reflector is configured to send a second continuous wave signal.

The initiator is configured to receive the second continuous wave signal, and obtain a second timestamp indicating time at which the initiator receives the second continuous wave signal.

The initiator is configured to perform frequency conversion on the second continuous wave signal to obtain a second measurement value.

The initiator is configured to obtain the first measurement value from the reflector, perform correction on the first measurement value and the second measurement value using the first timestamp and the second timestamp, and determine a distance between the initiator and the reflector by using the corrected first and second measurement values.

In a fourth aspect, the present disclosure provides an initiator applicable to a Bluetooth ranging apparatus further including a reflector.

The initiator is configured to send a first continuous wave signal, the reflector being configured to perform frequency conversion on the first continuous wave signal to obtain a first measurement value.

The initiator is configured to switch to a reception state, and obtain a first timestamp indicating time at which the initiator switches to the reception state.

The initiator is configured to receive a second continuous wave signal sent by the reflector, and obtain a second timestamp indicating time at which the initiator receives the second continuous wave signal.

The initiator is configured to perform frequency conversion on the second continuous wave signal to obtain a second measurement value.

The initiator is configured to obtain the first measurement value from the reflector, perform correction on the first measurement value and the second measurement value using the first timestamp and the second timestamp, and determine a distance between the initiator and the reflector by using the corrected first and second measurement values.

In a fifth aspect, the present disclosure provides a computer-readable storage medium having stored thereon a program that, when executed by a multi-core processor, causes the multi-core processor to perform the Bluetooth ranging correction method according to any one of the first and second aspects.

One of the advantages of the above embodiments is that by utilizing the first timestamp and the second timestamp, the phase deviation caused by the inconsistency between the digital intermediate frequency and the actual intermediate frequency can be eliminated. Thus, the technical solution of the present disclosure can correct the distance measurement between the initiator and the reflector and reduce measurement deviation during Bluetooth ranging.

Other advantages of the present disclosure will be described in more detail in conjunction with the following description and accompanying drawings.

It should be understood that the foregoing description is merely a general overview of the technical solutions of the present disclosure to facilitate a clearer understanding of the technical principles, such that the disclosure may be implemented in accordance with the teachings herein. To make the above and other objects, features, and advantages of the present disclosure more apparent and understandable, specific embodiments are described in detail below.

### BRIEF DESCRIPTION OF THE DRAWINGS

By reading the detailed description of the exemplary embodiments below, those skilled in the art will understand the advantages and benefits described herein as well as other advantages and benefits. The drawings are only for the purpose of illustrating the exemplary embodiments and are not to be considered as limiting the present disclosure. In the drawings:
FIG. 1 is a schematic flowchart of a Bluetooth ranging correction method according to an embodiment of the present disclosure;
FIG. 2 is a schematic flowchart of signal interaction between an initiator and a reflector according to an embodiment of the present disclosure;
FIG. 3 is a schematic flowchart of another Bluetooth ranging correction method according to an embodiment of the present disclosure;
FIG. 4 is a schematic diagram of a Bluetooth ranging apparatus according to an embodiment of the present disclosure; and
FIG. 5 is a communication schematic diagram of an initiator according to an embodiment of the present disclosure.

In the drawings, the same or corresponding reference numerals denote the same or corresponding parts.

### DETAILED DESCRIPTION

Exemplary embodiments of the present disclosure will be described in greater detail below with reference to the accompanying drawings. While the drawings illustrate exemplary embodiments, it should be understood that the present disclosure may be embodied in various forms and should not be construed as limited to the specific embodiments set forth herein. Rather, these embodiments are provided so that this disclosure will be thorough and complete, and will fully convey the scope of the disclosure to those skilled in the art.

In the description of the embodiments of the present disclosure, it should be understood that terms such as "including" or "having" are intended to indicate the presence of the disclosed features, numbers, steps, acts, components, parts, or combinations thereof in this specification, and do not preclude the possibility of the presence of one or more other features, numbers, steps, acts, components, parts, or combinations thereof.

Unless otherwise specified, "/" means "or". For example, A/B may mean A or B. "and/or" in this document is merely an association relationship describing associated objects, indicating that three relationships may exist. For example, A and/or B may indicate three cases: A alone, A and B together, and 4B alone.

The terms "first", "second", etc. are used merely to distinguish similar or identical technical features for ease of description, and should not be construed as indicating or implying relative importance or quantity. Thus, a feature defined as "first", "second", etc. may explicitly or implicitly include one or more of that feature. In the description of the embodiments of the present disclosure, unless otherwise specified, the term "plurality" means two or more than two.

It should be noted that the embodiments of the present disclosure and the features therein may be combined with each other unless the context clearly dictates otherwise. The present disclosure will be described in detail below with reference to the drawings and in conjunction with specific implementations.

In the embodiments of the present disclosure, the initiator may act as an executing entity to correct the distance measurement between the initiator and the reflector. An example is provided below for explanation.

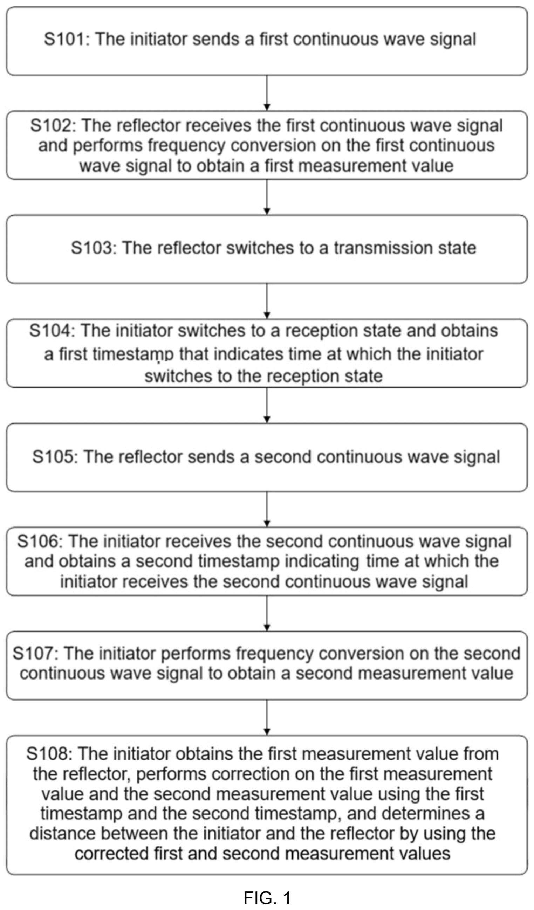

As shown in FIG. 1, the Bluetooth ranging correction method provided by the present disclosure is applicable to a Bluetooth ranging apparatus including an initiator and a reflector. The method includes:
S101: The initiator sends a first continuous wave signal.
S102: The reflector receives the first continuous wave signal and performs frequency conversion on the first continuous wave signal to obtain a first measurement value.
S103: The reflector switches to a transmission state.
S104: The initiator switches to a reception state and obtains a first timestamp. The first timestamp indicates time at which the initiator switches to the reception state.
S105: The reflector sends a second continuous wave signal.
S106: The initiator receives the second continuous wave signal and obtains a second timestamp. The second timestamp indicates time at which the initiator receives the second continuous wave signal.
S107: The initiator performs frequency conversion on the second continuous wave signal to obtain a second measurement value.
S108: The initiator obtains the first measurement value from the reflector, performs correction on the first measurement value and the second measurement value using the first timestamp and the second timestamp, and determines a distance between the initiator and the reflector by using the corrected first and second measurement values.

In the embodiment of the present disclosure, by utilizing the first timestamp and the second timestamp, the phase deviation caused by the inconsistency between the digital intermediate frequency and the actual intermediate frequency can be eliminated. Specifically, the initiator performs correction on the product using the first timestamp and the second timestamp, thereby eliminating the phase deviation caused by the inconsistency between the digital intermediate frequency and the actual intermediate frequency. Thus, the technical solution of the present disclosure can correct the distance measurement between the initiator and the reflector and reduce measurement deviation during Bluetooth ranging.

As a possible implementation, in the embodiment of the present disclosure, the digital mixer of the initiator remains enabled during execution of the Bluetooth ranging correction, to allow for compensation for variation in phase of the digital mixer of the initiator introduced in measurements across channels of different frequencies, thereby compensating for the difference between the carrier frequency of the initiator and that of the reflector. In the method of the embodiment of the present disclosure, by utilizing the first timestamp and the second timestamp and keeping the digital mixer of the initiator enabled, the continuity of the phase of the PLL during the transmit-receive switching process can be ensured. This eliminates the difference in the phase of the digital mixer during frequency sweeping and eliminates the difference between the digital intermediate frequency and the carrier frequency, thereby reducing measurement deviation during Bluetooth ranging.

In practical applications, the initiator may calculate the product of the first measurement value PCTi and the second measurement value PCTr using the first timestamp and the second timestamp. The initiator determines the distance between the initiator and the reflector based on the product of the first measurement value PCTi and the second measurement value PCTr in channels of different frequencies, thereby correcting the distance measurement between the initiator and the reflector and reducing measurement deviation during Bluetooth ranging.

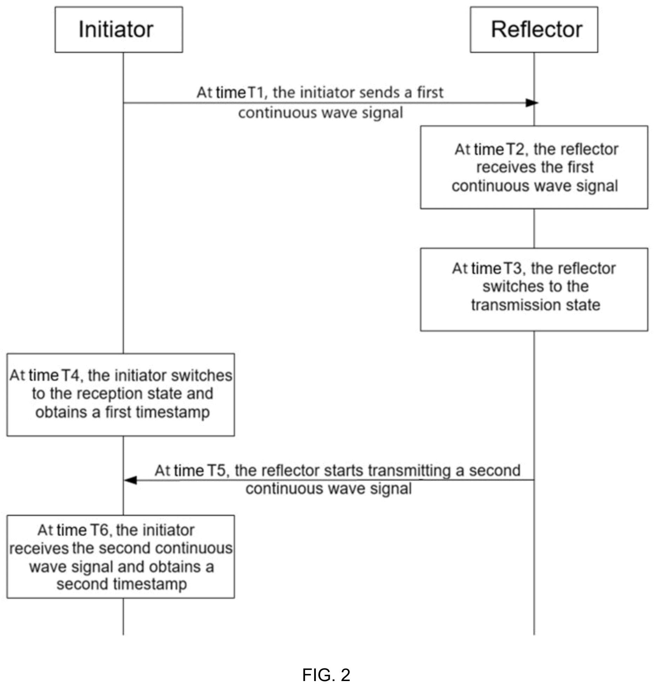

As shown in FIG. 2, in the embodiment of the present disclosure, the initiator acts as the party performing calibration. At time T1, the initiator starts transmitting a continuous wave (CW).

At time T1, the phase of the initiator is α, and the first continuous wave signal transmitted by it is:
$exp \left(j*\left(2πFtx\left(T1-T1\right)+α\right)\right)$
where Ftx represents the operating frequency of the PLL in the transmission state.

At time T1, the phase of the reflector is β, and the PLL operating state of the reflector is represented by:
$exp \left(j*\left(2π*Ftx*\left(t-T1\right)+β\right)\right)$

At time T2, the reflector receives the first continuous wave signal.

The reflector down-converts the first continuous wave signal using its PLL to obtain the first measurement value PCTi:
$PCTi = exp \left(j*\left(2π*Ftx*\left(T1-T1\right)+α-2π*Ftx*\left(T2-T1\right)-β\right)\right) = exp \left(j*\left(α-2π*Ftx*\left(T2-T1\right)-β\right)\right)$

At time T3, the reflector switches to the transmission (Tx) state.

The PLL operating state of the reflector is:
$exp \left(j*\left(β+2π*Ftx*\left(t-T1\right)\right)\right)$

At time T4, the initiator switches to the reception (Rx) state.

The PLL operating state of the initiator is:
$exp \left(j*\left(2π*Ftx*\left(T4-T1\right)+α+2π*Frx*\left(t-T4\right)+σ\right)\right)$
where σ is the phase jitter during the transmit-receive switch.

At time T4, the phase of the digital mixer of the initiator is δ, and its operating state is:
$exp \left(j*\left(2π*Fdig*\left(t-T4\right)+δ\right)\right)$
where Fdig represents the operating frequency of the digital mixer.

At time T5, the reflector starts transmitting the second continuous wave signal.

The second continuous wave signal transmitted by it is:
$exp \left(j*\left(β+2π*Ftx*\left(T5-T1\right)\right)\right)$

At time T6, the initiator receives the second continuous wave signal.

The initiator down-converts the second continuous wave signal using its PLL to obtain: 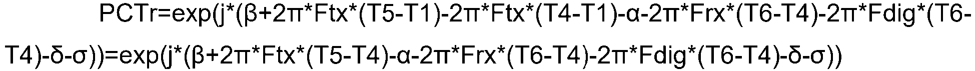 PCTr=exp(j*(β+2π*Ftx*(T5-T1)-2π*Ftx*(T4-T1)-α-2π*Frx*(T6-T4)-2π*Fdig*(T6-T4)-δ-σ))=exp(j*(β+2π*Ftx*(T5-T4)-α-2π*Frx*(T6-T4)-2π*Fdig*(T6-T4)-δ-σ))
where Frx represents the operating frequency of the PLL in the reception state.

In practical applications, the initiator may calculate the product PCTi*PCTr of the first measurement value PCTi and the second measurement value PCTr using the following formula: 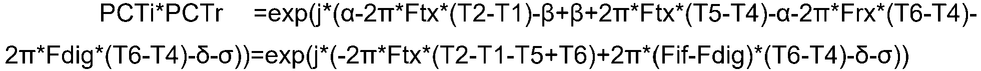 PCTi*PCTr =exp(j*(α-2π*Ftx*(T2-T1)-β+β+2π*Ftx*(T5-T4)-α-2π*Frx*(T6-T4)-2π*Fdig*(T6-T4)-δ-σ))=exp(j*(-2π*Ftx*(T2-T1-T5+T6)+2π*(Fif-Fdig)*(T6-T4)-δ-σ))
where Ftx represents the operating frequency of the PLL in the transmission state, Frx represents the operating frequency of the PLL in the reception state, Fdig represents the operating frequency of the digital mixer, Fif+Frx=Ftx. T1 represents the time when the initiator sends the first continuous wave signal, T2 represents the time when the reflector receives the first continuous wave signal, T3 represents the time when the reflector switches to the transmission state, T4 represents the time when the initiator switches to the reception state, T5 represents the time when the reflector starts sending the second continuous wave signal, T6 represents the time when the initiator receives the second continuous wave signal, and T2-T1 and T6-T5 each represent time of flight corresponding to the distance, α represents the phase of the initiator at time T1, β represents the phase of the reflector at time T1, δ represents the phase of the continuous wave signal acquired by the digital mixer of the initiator at time T4, and σ represents the phase jitter of the initiator during the transmit-receive switch.

It should be noted that δ is the phase of the digital mixer of the initiator at time T4. For δ variation across different channels, as long as the digital mixer remains enabled, compensation therefor is possible using the timestamp corresponding to T4. Moreover, the action corresponding to T4 is performed by the initiator, and the initiator can compensate for it by recording the first timestamp.

In the embodiment of the present disclosure, the initiator may calculate the product PCTi*PCTr of the first measurement value PCTi and the second measurement value PCTr using the above formula. The initiator can then obtain the PCTi*PCTr corresponding to channels of different frequencies. Since the actions corresponding to T4 and T6 are both performed by the initiator, the initiator can obtain the value of T6-T4 in the above formula by obtaining the time T4 corresponding to the first timestamp and the time T6 corresponding to the second timestamp. Furthermore, since the digital mixer of the initiator remains enabled, the variation in the phase δ of the digital mixer of the initiator introduced into measurements for the second continuous wave signals across channels of different frequencies is compensatable. Therefore, δ can be eliminated by using the PCTi*PCTr corresponding to channels of different frequencies. Moreover, σ in the PCTi*PCTr corresponding to channels of different frequencies is also substantially consistent, so σ can also be eliminated.

It can be seen that after σ and δ are eliminated, the present disclosure can calculate the signal flight time T2-T1 (T2-T1=T6-T5) using the time T4 indicated by the first timestamp and the time T6 indicated by the second timestamp. After determining the signal flight time, the initiator can determine the distance between the initiator and the reflector based on the signal flight time. Thus, in the method of the embodiment of the present disclosure, by utilizing the first timestamp and the second timestamp and keeping the digital mixer of the initiator enabled, the continuity of the phase of the PLL during the transmit-receive switching process can be ensured. This eliminates the difference in the phase of the digital mixer during frequency sweeping and eliminates the difference between the digital intermediate frequency and the carrier frequency, thereby reducing measurement deviation during Bluetooth ranging.

Based on the above Bluetooth ranging method performed by the initiator, an embodiment of the present disclosure further provides a Bluetooth ranging method that can be implemented by the initiator.

The present disclosure provides a Bluetooth ranging correction method applicable to an initiator of a Bluetooth ranging apparatus further including a reflector. The method includes:
S301: The initiator sends a first continuous wave signal, the reflector being configured to perform frequency conversion on the first continuous wave signal to obtain a first measurement value.
S302: The initiator switches to a reception state and obtains a first timestamp, the first timestamp indicating time at which the initiator switches to the reception state.
S303: The initiator receives a second continuous wave signal sent by the reflector and obtains a second timestamp, the second timestamp indicating time at which the initiator receives the second continuous wave signal.
S304: The initiator performs frequency conversion on the second continuous wave signal to obtain a second measurement value.
S305: The initiator obtains the first measurement value from the reflector, performs correction on the first measurement value and the second measurement value using the first timestamp and the second timestamp, and determines a distance between the initiator and the reflector by using the corrected first and second measurement values.

As a possible implementation, a digital mixer of the initiator remains enabled during execution of the Bluetooth ranging correction, to allow for compensation for variation in phase of the digital mixer of the initiator introduced in measurements across channels of different frequencies.

As a possible implementation, the initiator determines a product of the first measurement value and the second measurement value; and the initiator performs correction on the product using the first timestamp and the second timestamp.

As a possible implementation, the first measurement value PCTi is calculated using the following formula:
$PCTi = exp \left(j*\left(2π*Ftx*\left(T1-T1\right)+α-2π*Ftx*\left(T2-T1\right)-β\right)\right) = exp \left(j*\left(α-2π*Ftx*\left(T2-T1\right)-β\right)\right)$
where Ftx represents an operating frequency of a PLL in a transmission state, T1 represents time at which the initiator sends the first continuous wave signal, T2 represents time at which the reflector receives the first continuous wave signal, α represents a phase of the initiator at time T1, and β represents a phase of the reflector at time T1.

As a possible implementation, the second measurement value PCTr is calculated using the following formula: 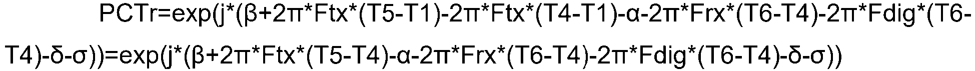 PCTr=exp(j*(β+2π*Ftx*(T5-T1)-2π*Ftx*(T4-T1)-α-2π*Frx*(T6-T4)-2π*Fdig*(T6-T4)-δ-σ))=exp(j*(β+2π*Ftx*(T5-T4)-α-2π*Frx*(T6-T4)-2π*Fdig*(T6-T4)-δ-σ))
where Frx represents an operating frequency of the PLL in a reception state, Fdig represents an operating frequency of the digital mixer, Fif+Frx=Ftx, T3 represents time at which the reflector switches to the transmission state, T4 represents time at which the initiator switches to the reception state, T5 represents time at which the reflector starts sending the second continuous wave signal, T6 represents time at which the initiator receives the second continuous wave signal, δ represents a phase of the digital mixer of the initiator at time T4, and σ represents a phase jump of the initiator caused by switching from transmission to reception.

As a possible implementation, the initiator calculates a product PCTi*PCTr of the first measurement value PCTi and the second measurement value PCTr using the following formula: 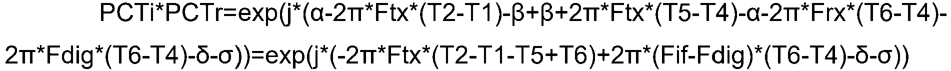 PCTi*PCTr=exp(j*(α-2π*Ftx*(T2-T1)-β+β+2π*Ftx*(T5-T4)-α-2π*Frx*(T6-T4)-2π*Fdig*(T6-T4)-δ-σ))=exp(j*(-2π*Ftx*(T2-T1-T5+T6)+2π*(Fif-Fdig)*(T6-T4)-δ-σ))
where T2-T1 and T6-T5 each represent time of flight corresponding to the distance.

It should be noted that the Bluetooth ranging correction method in the embodiment of the present disclosure can implement the various processes of the previous method embodiments and achieve the same effects and functions, which will not be repeated here.

In the description of this specification, descriptions with reference to the terms "some possible implementations," "some implementations," "example," "specific example," or "some examples" mean that specific features, structures, materials, or characteristics described in conjunction with the implementation or example are included in at least one implementation or example of the present disclosure, and the above terms do not necessarily refer to the same implementation or example. Furthermore, the described specific features, structures, materials, or characteristics may be combined in any suitable manner in any one or more implementations or examples. In addition, those skilled in the art may integrate and combine different implementations or examples described in this specification, as well as features of different implementations or examples, without conflicting with each other.

With respect to the method flowcharts of the embodiments of the present disclosure, certain operations are described as different steps performed in a certain order. Such flowcharts are illustrative and not restrictive. Certain steps described herein may be grouped together and performed in a single operation, certain steps may be divided into multiple sub-steps, and certain steps may be performed in a different order than shown herein. The various steps shown in the flowcharts may be implemented in any manner by any circuit structure and/or tangible mechanism (e.g., by software running on a computer device, hardware (e.g., logic functions implemented by a processor or chip), etc., and/or any combination thereof).

Those skilled in the art will appreciate that the order of writing the steps in the methods described in the above detailed description does not imply a strict order of execution, and the specific order of execution of the steps should be determined by their function and possible inherent logic.

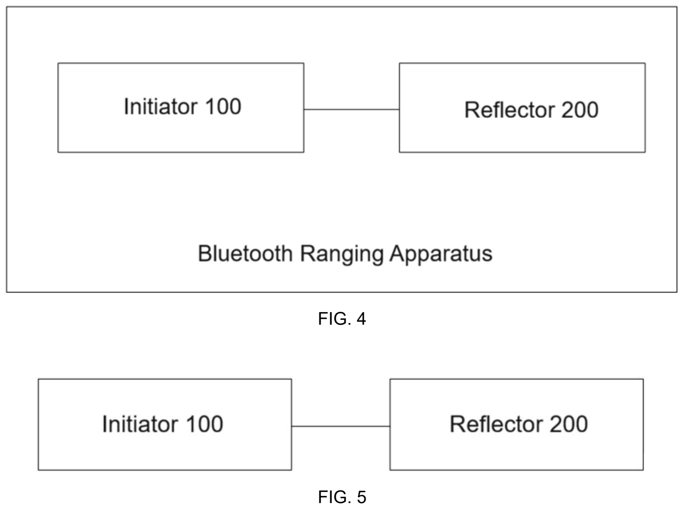

Based on the Bluetooth ranging correction method provided by the above embodiments, an embodiment of the present disclosure further provides a Bluetooth ranging apparatus. As shown in FIG. 4, the Bluetooth ranging apparatus provided by an embodiment of the present disclosure includes an initiator 100 and a reflector 200.

The initiator 100 is configured to send a first continuous wave signal.

The reflector 200 is configured to receive the first continuous wave signal, and perform frequency conversion on the first continuous wave signal to obtain a first measurement value.

The reflector 200 is configured to switch to a transmission state.

The initiator 100 is configured to switch to a reception state, and obtain a first timestamp indicating time at which the initiator 100 switches to the reception state.

The reflector 200 is configured to send a second continuous wave signal.

The initiator 100 is configured to receive the second continuous wave signal, and obtain a second timestamp indicating time at which the initiator 100 receives the second continuous wave signal.

The initiator 100 is configured to perform frequency conversion on the second continuous wave signal to obtain a second measurement value.

The initiator 100 is configured to obtain the first measurement value from the reflector 200, perform correction on the first measurement value and the second measurement value using the first timestamp and the second timestamp, and determine a distance between the initiator 100 and the reflector 200 by using the corrected first and second measurement values.

It should be noted that the Bluetooth ranging apparatus in the embodiment of the present disclosure includes various components for implementing the processes of the previous method embodiments and achieves the same effects and functions, which will not be repeated here.

Based on the Bluetooth ranging correction method provided by the above embodiments, an embodiment of the present disclosure further provides an initiator. As shown in FIG. 5, the initiator 100 provided by an embodiment of the present disclosure is applicable to a Bluetooth ranging apparatus further including a reflector 200.

The initiator 100 is configured to send a first continuous wave signal, the reflector 200 being configured to perform frequency conversion on the first continuous wave signal to obtain a first measurement value.

The initiator 100 is configured to switch to a reception state, and obtain a first timestamp indicating time at which the initiator 100 switches to the reception state.

The initiator 100 is configured to receive a second continuous wave signal sent by the reflector 200, and obtain a second timestamp indicating time at which the initiator 100 receives the second continuous wave signal.

The initiator 100 is configured to perform frequency conversion on the second continuous wave signal to obtain a second measurement value.

The initiator 100 is configured to obtain the first measurement value from the reflector 200, perform correction on the first measurement value and the second measurement value using the first timestamp and the second timestamp, and determine a distance between the initiator 100 and the reflector 200 by using the corrected first and second measurement values.

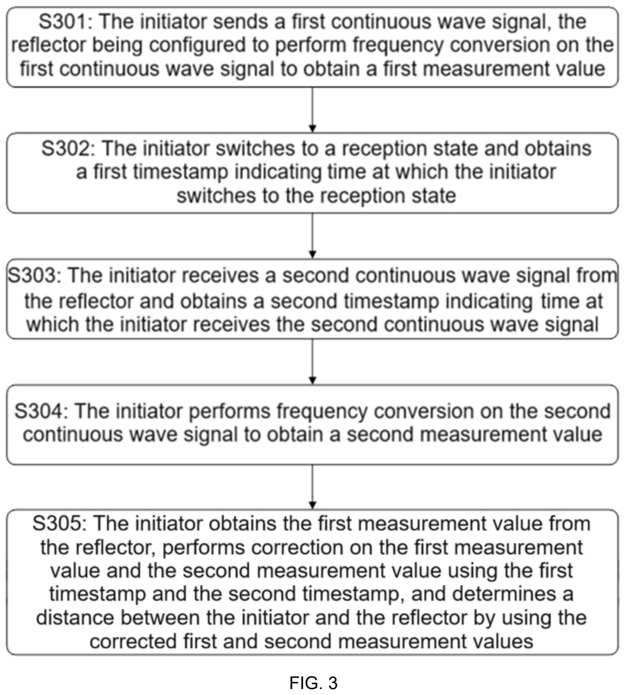

It should be noted that the initiator in the embodiment of the present disclosure includes various components for implementing the processes of the previous method embodiments and achieves the same effects and functions, which will not be repeated here. According to some embodiments of the present disclosure, a Bluetooth ranging apparatus according to an embodiment of the present disclosure is provided for executing the Bluetooth ranging correction method shown in FIG. 1 or FIG. 3. The apparatus includes: at least one processor; and a memory communicatively coupled to the at least one processor; where the memory has stored therein instructions executable by the at least one processor, and the instructions, when executed by the at least one processor, cause the at least one processor to perform the Bluetooth ranging correction method of the above embodiments.

According to some embodiments of the present disclosure, a non-volatile computer storage medium for the Bluetooth ranging correction method is provided, having stored thereon computer-executable instructions configured to, when executed by a processor, cause the processor to perform the Bluetooth ranging correction method of the above embodiments.

Computer-readable medium includes both permanent and non-permanent, removable and non-removable medium, and information storage can be achieved by any method or technology. Information may be computer-readable instructions, data structures, program modules, or other data. Examples of computer-readable storage medium include, but are not limited to, phase-change memory (PRAM), static random-access memory (SRAM), dynamic random-access memory (DRAM), other types of random-access memory (RAM), read-only memory (ROM), electrically erasable programmable read-only memory (EEPROM), flash memory or other memory technologies, compact disc read-only memory (CD-ROM), digital versatile disc (DVD) or other optical storage, magnetic cassette tape, magnetic tape, magnetic disk storage or other magnetic storage devices, or any other non-transmission medium that can be used to store information that can be accessed by a computing device. Furthermore, although the operations of the method of the present disclosure are shown in a particular order in the drawings, this does not require or imply that the operations must be performed in that particular order, or that all of the operations shown must be performed to achieve the desired result. Additionally, certain steps may be omitted, multiple steps may be combined into one step for execution, and/or one step may be decomposed into multiple sub-steps for execution.

Although the spirit and principles of the present disclosure have been described above with reference to several specific embodiments, it should be understood that the present disclosure is not limited to the specific embodiments disclosed, and the division of aspects does not imply that features in these aspects cannot be combined. The present disclosure is intended to cover various modifications and equivalent arrangements included within the spirit and scope of the appended claims.

## Claims

1. A method of Bluetooth ranging correction, applicable to a Bluetooth ranging apparatus comprising an initiator and a reflector, the method comprising:
sending, by the initiator, a first continuous wave signal;
receiving, by the reflector, the first continuous wave signal, and performing frequency conversion on the first continuous wave signal to obtain a first measurement value;
switching, by the reflector, to a transmission state;
switching, by the initiator, to a reception state, and obtaining a first timestamp that indicates time at which the initiator switches to the reception state;
sending, by the reflector, a second continuous wave signal;
receiving, by the initiator, the second continuous wave signal, and obtaining a second timestamp that indicates time at which the initiator receives the second continuous wave signal;
performing, by the initiator, frequency conversion on the second continuous wave signal to obtain a second measurement value; and
obtaining, by the initiator, the first measurement value from the reflector, performing correction on the first measurement value and the second measurement value using the first timestamp and the second timestamp, and determining a distance between the initiator and the reflector by using the corrected first and second measurement values.

2. The method according to claim 1, wherein a digital mixer of the initiator remains enabled during execution of the Bluetooth ranging correction, to allow for compensation for variation in phase of the digital mixer of the initiator introduced in measurements across channels of different frequencies.

3. The method according to claim 1, wherein performing, by the initiator, correction on the first measurement value and the second measurement value using the first timestamp and the second timestamp comprises:
determining, by the initiator, a product of the first measurement value and the second measurement value; and
performing, by the initiator, correction on the product using the first timestamp and the second timestamp.

4. The method according to claim 1, wherein the first measurement value is calculated as $PCTi = exp \left(j*\left(2π*Ftx*\left(T1-T1\right)+α-2π*Ftx*\left(T2-T1\right)-β\right)\right) = exp \left(j*\left(α-2π*Ftx\left(T2-T1\right)-β\right)\right)$ wherein Ftx represents an operating frequency of a phase-locked loop (PLL) in a transmission state, T1 represents time at which the initiator sends the first continuous wave signal, T2 represents time at which the reflector receives the first continuous wave signal, α represents a phase of the initiator at time T1, and β represents a phase of the reflector at time T1.

5. The method according to claim 4, wherein the second measurement value is calculated as: 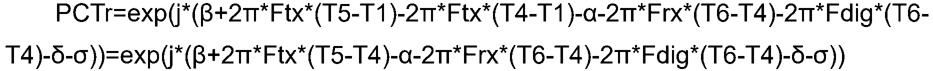 PCTr=exp(j*(β+2π*Ftx*(T5-T1)-2π*Ftx*(T4-T1)-α-2π*Frx*(T6-T4)-2π*Fdig*(T6-T4)-δ-σ))=exp(j*(β+2π*Ftx*(T5-T4)-α-2π*Frx*(T6-T4)-2π*Fdig*(T6-T4)-δ-σ)) wherein Frx represents an operating frequency of the PLL in a reception state, Fdig represents an operating frequency of the digital mixer, Fif+Frx=Ftx, T3 represents time at which the reflector switches to the transmission state, T4 represents time at which the initiator switches to the reception state, T5 represents time at which the reflector starts sending the second continuous wave signal, T6 represents time at which the initiator receives the second continuous wave signal, δ represents a phase of the digital mixer of the initiator at time T4, and σ represents a phase jump of the initiator caused by switching from transmission to reception.

6. The method according to claim 5, wherein the initiator calculates a product PCTi*PCTr of the first measurement value PCTi and the second measurement value PCTr using the following formula: 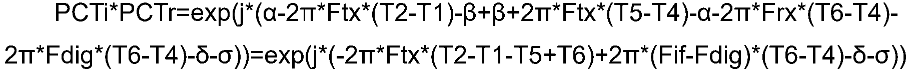 PCTi*PCTr=exp(j*(α-2π*Ftx*(T2-T1)-β+β+2π*Ftx*(T5-T4)-α-2π*Frx*(T6-T4)-2π*Fdig*(T6-T4)-δ-σ))=exp(j*(-2π*Ftx*(T2-T1-T5+T6)+2π*(Fif-Fdig)*(T6-T4)-δ-σ)) wherein T2-T1 and T6-T5 each represent time of flight corresponding to the distance.

7. A method of Bluetooth ranging correction, applicable to an initiator of a Bluetooth ranging apparatus further comprising a reflector, the method comprising:
sending, by the initiator, a first continuous wave signal, the reflector being configured to perform frequency conversion on the first continuous wave signal to obtain a first measurement value;
switching, by the initiator, to a reception state, and obtaining a first timestamp that indicates time at which the initiator switches to the reception state;
receiving, by the initiator, a second continuous wave signal sent by the reflector, and obtaining a second timestamp that indicates time at which the initiator receives the second continuous wave signal;
performing, by the initiator, frequency conversion on the second continuous wave signal to obtain a second measurement value; and
obtaining, by the initiator, the first measurement value from the reflector, performing correction on the first measurement value and the second measurement value using the first timestamp and the second timestamp, and determining a distance between the initiator and the reflector by using the corrected first and second measurement values.

8. The method according to claim 7, wherein a digital mixer of the initiator remains enabled during execution of the Bluetooth ranging correction, to allow for compensation for variation in phase of the digital mixer of the initiator introduced in measurements across channels of different frequencies.

9. The method according to claim 7, wherein performing, by the initiator, correction on the first measurement value and the second measurement value using the first timestamp and the second timestamp comprises:
determining, by the initiator, a product of the first measurement value and the second measurement value; and
performing, by the initiator, correction on the product using the first timestamp and the second timestamp.

10. The method according to claim 7, wherein the first measurement value is calculated as $PCTi = exp \left(j*\left(2π*Ftx*\left(T1-T1\right)+α-2π*Ftx*\left(T2-T1\right)-β\right)\right) = exp \left(j*\left(α-2π*Ftx\left(T2-T1\right)-β\right)\right)$ wherein Ftx represents an operating frequency of a PLL in a transmission state, T1 represents time at which the initiator sends the first continuous wave signal, T2 represents time at which the reflector receives the first continuous wave signal, α represents a phase of the initiator at time T1, and β represents a phase of the reflector at time T1.

11. The method according to claim 10, wherein the second measurement value is calculated as: 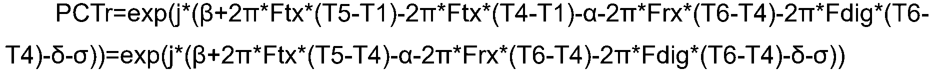 PCTr=exp(j*(β+2π*Ftx*(T5-T1)-2π*Ftx*(T4-T1)-α-2π*Frx*(T6-T4)-2π*Fdig*(T6-T4)-δ-σ))=exp(j*(β+2π*Ftx*(T5-T4)-α-2π*Frx*(T6-T4)-2π*Fdig*(T6-T4)-δ-σ)) wherein Frx represents an operating frequency of the PLL in a reception state, Fdig represents an operating frequency of the digital mixer, Fif+Frx=Ftx, T3 represents time at which the reflector switches to the transmission state, T4 represents time at which the initiator switches to the reception state, T5 represents time at which the reflector starts sending the second continuous wave signal, T6 represents time at which the initiator receives the second continuous wave signal, δ represents a phase of the digital mixer of the initiator at time T4, and σ represents a phase jump of the initiator caused by switching from transmission to reception.

12. The method according to claim 11, wherein the initiator calculates a product PCTi*PCTr of the first measurement value PCTi and the second measurement value PCTr using the following formula: 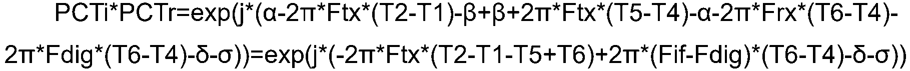 PCTi*PCTr=exp(j*(α-2π*Ftx*(T2-T1)-β+β+2π*Ftx*(T5-T4)-α-2π*Frx*(T6-T4)-2π*Fdig*(T6-T4)-δ-σ))=exp(j*(-2π*Ftx*(T2-T1-T5+T6)+2π*(Fif-Fdig)*(T6-T4)-δ-σ)) wherein T2-T1 and T6-T5 each represent time of flight corresponding to the distance.

13. A Bluetooth ranging apparatus, comprising an initiator and a reflector;
wherein the initiator is configured to send a first continuous wave signal;
the reflector is configured to receive the first continuous wave signal, and perform frequency conversion on the first continuous wave signal to obtain a first measurement value;
the reflector is configured to switch to a transmission state;
the initiator is configured to switch to a reception state, and obtain a first timestamp indicating time at which the initiator switches to the reception state;
the reflector is configured to send a second continuous wave signal;
the initiator is configured to receive the second continuous wave signal, and obtain a second timestamp indicating time at which the initiator receives the second continuous wave signal;
the initiator is configured to perform frequency conversion on the second continuous wave signal to obtain a second measurement value; and
the initiator is configured to obtain the first measurement value from the reflector, perform correction on the first measurement value and the second measurement value using the first timestamp and the second timestamp, and determine a distance between the initiator and the reflector by using the corrected first and second measurement values.

14. An initiator for a Bluetooth ranging apparatus further comprising a reflector;
wherein the initiator is configured to send a first continuous wave signal, the reflector being configured to perform frequency conversion on the first continuous wave signal to obtain a first measurement value;
the initiator is configured to switch to a reception state, and obtain a first timestamp indicating time at which the initiator switches to the reception state;
the initiator is configured to receive a second continuous wave signal sent by the reflector, and obtain a second timestamp indicating time at which the initiator receives the second continuous wave signal;
the initiator is configured to perform frequency conversion on the second continuous wave signal to obtain a second measurement value; and
the initiator is configured to obtain the first measurement value from the reflector, perform correction on the first measurement value and the second measurement value using the first timestamp and the second timestamp, and determine a distance between the initiator and the reflector by using the corrected first and second measurement values.

15. A computer-readable storage medium having stored thereon a program that, when executed by a multi-core processor, causes the multi-core processor to perform the method according to any one of claims 1 to 12.
